# EUROPEAN PATENT APPLICATION

(11) **EP 4 560 854 A1**
(43) Date of publication of application: **28.05.2025**
(21) Application number: 23212225.9
(22) Date of filing: 27.11.2023
(51) Int. Cl.: H02G 1/06, B21B 1/16, B65H 57/14, H02G 11/00, B60L 53/18, B65H 75/42, B65H 75/44, H02G 11/02

(54) **CABLE GUIDING DEVICE, MINING VEHICLE, AND METHOD**

(71) Applicant: Sandvik Mining and Construction Oy, 33330 Tampere (FI)
(72) Inventor: VERHO, Samuli, 33330 Tampere (FI); TEPPONEN, Perttu, 33330 Tampere (FI); RANTANEN, Petri, 33330 Tampere (FI)
(74) Representative: Sandvik

(57) **Abstract**

A cable guiding device, a mining vehicle, and method of guiding a trailing electric cable of an electrically powered mining vehicle. The cable guiding device (17) comprises an elongated cable guiding tail (18) mounted to a rear end portion (15) of the mining vehicle (1). At a distal end (18b) of the cable guiding tail there is a cable guiding assembly (19) comprising several guide rollers (28) for guiding the electric cable. The assembly is mounted to the cable guiding tail by means of rotating joint (20) so that the assembly can turn (T) in relation to the cable guiding tail.

## Description

### Background of the invention

The invention relates to a cable guiding device for guiding a trailing electric cable of an electrically powered mining vehicle.

The invention further relates to a mining vehicle, and to a method of guiding a trailing electric cable of an electrically powered mining vehicle.

The field of the invention is defined more specifically in the preambles of the independent claims.

At mines different mining vehicles are used for executing mine work tasks. The mining vehicles may be electrically operated and may be connected to an external electric source by means of an electric cable for providing needed electrical energy. The electric cable is typically controlled by means of a cable handling system comprising a cable reel mounted on a rear part of the mining vehicle and allowing the cable to be unwound and wound on the cable reel in accordance with movements of the mining vehicle. The rear part of the mining vehicle also comprises a cable guiding device for guiding the electric cable. However, the known cable guiding devices have shown to have some disadvantages in their structures and also in capabilities to provide proper guidance for the electric cable in different movement situations.

### Brief description of the invention

An object of the invention is to provide a novel and improved cable guiding device, a mining vehicle equipped with such cable guiding device, and a method for guiding a trailing electric cable.

The cable guiding device according to the invention is characterized by the characterizing features of the first independent apparatus claim.

The mining vehicle according to the invention is characterized by the characterizing features of the second independent apparatus claim.

The method according to the invention is characterized by the characterizing features of the independent method claim.

An idea of the disclosed solution is that an electrically powered mining vehicle can be provided with a cable guiding device for guiding a trailing electric cable. The device comprises an elongated cable guiding tail mountable to the mining vehicle and a cable guiding assembly mounted to a distal end part of the cable guiding tail. The assembly comprises several guide rollers for guiding the cable. The device further comprises a rotating joint between the cable guiding assembly and the cable guiding tail whereby the cable guiding assembly is turnable in relation to the cable guiding tail. In other words, orientation of the cable guiding assembly can change in relation to the cable guiding tail when the mining vehicle is moving.

An advantage is the electric cable can run via the turnable cable guiding assembly smoothly and no extra loadings are directed to the structure of the electric cable. Formation of sharp bends to the electric cable can be prevented when the cable guiding assembly can turn in accordance with the movements and orientation of the mining vehicle.

According to an embodiment, the rotating joint comprises a rotating axle around which the cable guiding assembly is freely rotatable. The cable guide assembly is connected to the freely rotatable rotating axle and can turn freely in both rotating directions.

According to an embodiment, rotation axis of the rotating joint is orientated in transverse direction relative to longitudinal direction of the cable guiding tail.

According to an embodiment, the rotating joint is mounted on a bottom surface of the cable guiding tail at a distal second end portion of the cable guiding tail. The rotating joint may comprise a fastening plate, support or bracket which may be fastened to the cable guiding tail by means of fastening screws. Rotation axis of the rotating joint may be orientated in transverse direction relative to the bottom surface of the cable guiding tail.

According to an embodiment, the guide rollers of the cable guiding assembly are freely rotatable around their central rotation axis. Then the structure can be simple, durable and inexpensive.

According to an embodiment, the cable guiding assembly comprises a frame and at least one of the guide rollers is provided with a quick coupling fastening system for allowing removal of the at least guide roller from the frame. In other words, the cable guiding assembly is provided with an opening feature allowing the structure to be easily opened and closed so that the electric cable can be coupled and uncoupled to the cable guiding assembly. This is advantageous for example when the mining vehicle is prepared for road transportation.

According to an embodiment, the quick coupling fastening system may comprise grooves or hook-shaped surfaces for receiving ends of an axle of the guide roll, and also wing nuts or corresponding fastening elements for locking the ends of the axle. Alternatively, there may be shape locking surfaces and elements for quick coupling the ends of the axle.

According to an embodiment, the cable guiding assembly comprises several elongated guide rollers having side profiles which are geometrically asymmetric in relation to a center between a first end and a second end of the guide rollers. In other words, the guide roller with the geometrically asymmetric side profile may have diameters with different sizes at the first and second ends. This feature can be utilized for providing control for the electric cable not only in transverse direction of rotation axis of the guide roller but also in one axial direction of the guide roller.

When two guide rollers with the similar type of asymmetric side profile are facing each other, then proper support can be provided also in one axial direction of the guide rollers for the electric cable which is passing between the guide rollers. In the opposite axial direction the two opposing guide rollers with the asymmetric side profiles do not provide any support for the cable. This feature is advantageous when removing the electric cable from the space between the guide rollers.

According to an embodiment, the cable guiding assembly comprises a frame connected to the rotating joint and arranged to provide support for the guide rollers. There are two first side rollers and two second side rollers arranged on opposing sides of the frame and being parallel with rotation axis of the rotating joint. There are also two down rollers located adjacent lower ends of the first and second side rollers and being orientated in transverse direction in relation to the first and second side rollers. Further, each of the first and second side rollers are provided with geometrically asymmetrical shapes with enlarged side profiles at their first end portions being closer to the rotating joint and opposing their second end portions adjacent to the down rollers. Then the enlarged side profiles are configured to serve as guide surfaces for the electric cable in a direction towards the rotating joint.

In other words, the side rollers and the down rollers limit together a guide opening between them. The guide opening is surrounding the electric cable passing through the guide opening.

The four side rollers can provide support for the electric cable in lateral direction, and further the enlarged portions of the side rollers provide support for the electric cable in a direction towards the rotating joint and the cable guiding tail. The two down rollers can provide support for the electric cable in a direction away from the rotating joint and the cable guiding tail.

According to an embodiment, the down roller is provided with a cylindrical outer surface serving as a guide surface facing towards the electrical cable. The down roller is located below the electrical cable whereby forces caused by the gravity are directed to the down roller. The cylindrical outer surface being transverse to the gravity force tolerates well loadings and wear.

According to an embodiment, each guide roller comprises an axle which is immovably mounted at its both distal ends to the frame of the cable guiding assembly. The guide roller further comprises a rotating casing and bearing elements between the casing and the immovable axle.

According to an embodiment, an outer surface of the side roller comprises a first cylindrical section at the second end portion. A second cylindrical section at the first end portion is provided with a greater diameter compared to the first cylindrical section. There is a continuously enlarging section between the first and second cylindrical sections and the outer diameter expands nonlinearly from the first cylindrical section to the second cylindrical section. In other words, the side rollers have specially designed outer profiles wherein the continuously enlarging sections form curved guiding surfaces towards the electric cable whereby the side rollers can provide smooth and gentle guidance for the electric cable also in situations when the cable is moving towards the rotating joint.

According to an embodiment, the disclosed solution relates also to a mining vehicle comprising: a movable carrier; at least one mine work device mounted on the carrier; an electrical operating system for powering the mining vehicle; a cable reel for reeling in and out an electric cable; and at least one cable guiding device for handling the electric cable. The cable guiding device is in accordance with the features and embodiments disclosed in this document. In other words, the mining vehicle is provided with the cable guiding device for preventing driving over the electric cable and also preventing formation of too sharp bending. Thereby, the disclosed device provides protection for the cable, facilitates work of an operator of the mine vehicle, and enhances mining operations.

According to an embodiment, the mining vehicle may be a rock drilling rig, a bolting rig, a mine truck, or a loading vehicle, for example. Thus, the mine work device of the mining vehicle may be a rock drilling unit, a bolting head, a bucket, or a dump box, for example.

According to an embodiment, the cable guiding tail is mounted to an upper part of a rear end part of the mining vehicle and has downwards slanted orientation.

According to an embodiment, the mounting between the carrier and the cable guiding tail is releasable allowing thereby moving of the cable guiding tail into a transport position wherein the cable guiding tail is orientated in a transverse direction in relation to a longitudinal direction of the mining vehicle. In other words, the cable guiding tail can be released and moved to the transport position so that it is not oriented in longitudinal direction of the mining vehicle and does not thereby extend overall length of the mining vehicle. This is advantageous for example when transportations of the mining vehicle are executed by means of road transportations.

According to an embodiment, the cable guiding tail has a normal operational position, wherein the cable guiding tail is oriented in the longitudinal direction of the mining vehicle. During the normal operation there is no need to turn the cable guiding tail since the rotating joint takes care off smooth run of the electric cable.

According to an embodiment, mounting elements at the first end part of the cable guiding tail can be opened so that the movement to the transport position is possible. It is for example possible that the mounting means comprises one or more fastening screws and locking surfaces preventing lateral turning of the cable guiding tail. When the fastening screws are removed, then the cable guiding tail can be lifted in upward direction for releasing the mating locking surfaces so that turning to the transport position is allowed. It is also possible to provide the mounting of the cable guiding tail with quick coupling elements or shape locking so that the first end can be uncoupled from the carrier of the mining vehicle for the duration of the turning measures. At the transport position there may be locking elements or surfaces for keeping the cable guiding tail in place.

According to an embodiment, the disclosed solution relates also to a method of guiding a trailing electric cable of an electrically powered mining vehicle. The method comprises: arranging the electric cable to pass through a cable guiding assembly and supporting the electric cable by means of several guide rollers of the cable guiding assembly; and supporting the cable guiding assembly to a distal part of a cable guiding tail mounted to a rear end part of the mining vehicle. The method further comprises allowing the cable guiding assembly to turn in relation to the cable guiding tail in response to movements of the mining vehicle.

The above disclosed embodiments may be combined in order to form desired solutions.

### Brief description of the figures

Some embodiments are described in more detail in the accompanying drawings, in which
Figure 1 is a schematic side view of a mining vehicle provided with a cable guiding device,
Figure 2 is a schematic top view of a rear part of a mining vehicle and also shows a cable guide tail in a normal operational position and in a slanted transport position,
Figures 3 - 6 are schematic views of a cable guide assembly and a rotating joint in different view angles,
Figures 7 and 8 are schematic cross-sectional views of the cable guide assembly and the rotating joint shown in Figures 3 - 6, and
Figure 9 is a schematic view of a cable guiding device.

For the sake of clarity, the figures show some embodiments of the disclosed solution in a simplified manner. In the figures, like reference numerals identify like elements.

### Detailed description of some embodiments

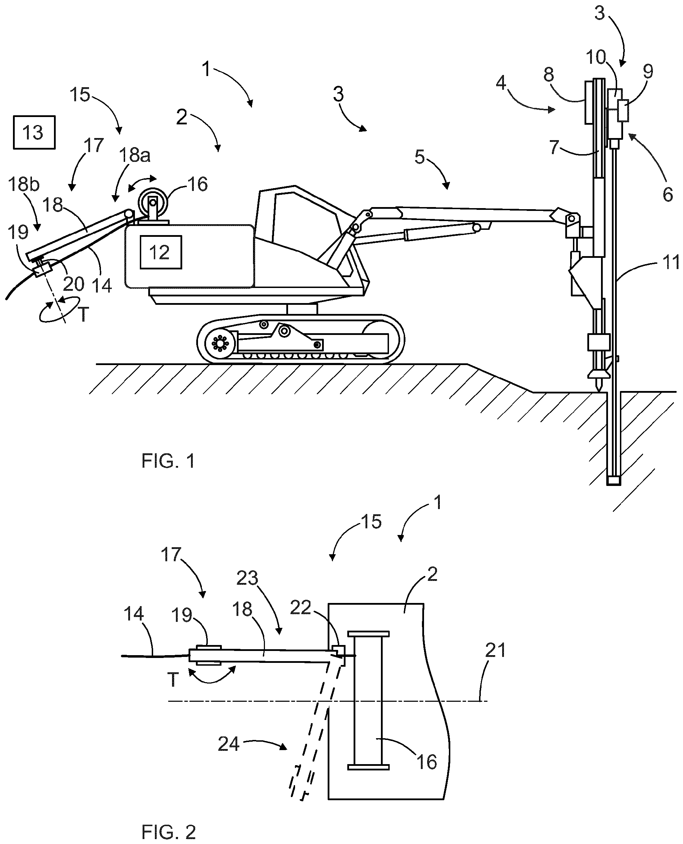

Figure 1 discloses a mining vehicle 1 which comprises a movable carrier 2 and one or more mine work devices 3. In this case the mining vehicle 1 is a rock drilling rig for drilling drill holes to a rock surface. The rock drilling rig comprises one or more rock drilling units 4 arranged on one or more drilling booms 5. The drilling unit 4 serves as the mine work device 3 and comprises a rock drilling machine 6 which is movable on a feed beam 7 by means of a feed device 8. In Figure 1 the rock drilling machine 6 is of top hammer type and comprises a rotating device 9 and an impact device 10 for providing a drilling tool 11 with a turning movement and impact pulses. However, the rock drilling machine 6 may alternatively be a rotary drilling machine comprising only a rotating head, or a down-the-hole (DTH) drilling machine comprising a rotating head and an impact device arranged at a distal end portion of a tool 11.

The mining vehicle 1 is electrically operable whereby it has an electrical operating system 12 which is connected to an external electric source 13 by means of a trailing electric cable 14. The electrical operating system 12 may provide needed energy for a hydraulic system, drive motors, electrical motors, electrical devices and other actuators. The external electric source 13 can be an electric power network of a mine or a mobile electric source, for example. At rear part 15 of the mining vehicle 1 there is a cable reel 16 for reeling in and out the electrical cable 14 when the mining vehicle 1 moves. There is also a cable guiding device 17 at the rear part 15 for handling the electric cable 14. The cable guiding device 17 comprises a cable guiding tail 18 which is an elongated arm comprising a first end 18a mounted to the mining vehicle 1 and a distal second end 18b. A cable guiding assembly 19 is mounted to the second end 18b of the cable guiding tail 18. The assembly 19 comprises several guide rollers for guiding the electric cable 14. A rotating joint 20 is arranged between the cable guiding assembly 19 and the cable guiding tail 18 for making the cable guiding assembly 19 turnable T in relation to the cable guiding tail 18.

Figure 1 further shows that the cable guiding tail 18 mounted on an upper part of a rear end 15 of the mining vehicle 1 may have downwards slanted orientation. This is advantageous since the electric cable 14 is lying on a ground and can be smoothly guided therefrom towards the cable reel 16.

Let it be mentioned that Figure 1 is only an example of the mining vehicle 1. The same cable guiding device 17 can be implemented in other type of mining vehicles. Examples of other mining vehicles have already been mentioned earlier in this document.

Figure 2 discloses that a cable guiding tail 18 of a cable guiding device 17 may be mounted asymmetrically in relation to central axis 21 of a mining vehicle 1. Then a mounting system 22 of the cable guiding tail 18 is located at an uneven distance from longitudinal sides of a carrier 2 of the mining vehicle 1. The cable guiding tail 18 has a normal operational position 23, wherein the cable guiding tail 18 is oriented in the longitudinal direction of the mining vehicle 1. During the normal operation there is no need to turn the cable guiding tail 18 since a cable guiding assembly 19 can turn T and can take care off smooth run of an electric cable 14 towards a cable reel 16. Thus, the cable guiding tail 18 may be immovably fastened or locked when in the normal position 23. For clarity reasons reeling control and assisting devices are not shown in Figures 1 and 2.

Figure 2 discloses in broken lines that the cable guiding tail 18 can be moved to a transport position 24 wherein it is oriented in transverse direction relative to the central axis 21. In the transport position 24 total length of the mining vehicle 1 is shorter. Since the mounting system 22 is located asymmetrically, the cable guiding tail 18 does not necessarily increase width of the mining vehicle 1 in the transverse direction.

Preparations for the transport position 24 includes removing an electrical cable 14 from the cable guiding assembly 19 and opening mounting or locking provided by the mounting system 22. Thereafter, the cable guiding tail 18 can be turned into the transport position 24 and locked immovably therein. There are several different possibilities and mechanisms available for arranging the locking and release functions in the mounting system 22.

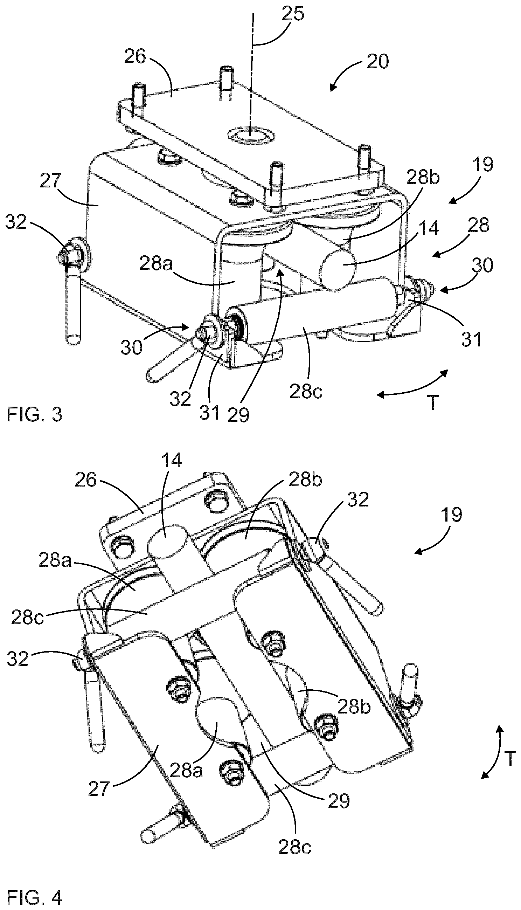

Figures 3 - 6 disclose a cable guiding assembly 19 and a rotating joint 20 by means of which the assembly 19 is mountable so that it can turn T freely around rotation axis 25. The rotating joint 20 may comprises a fastening plate 26 which can be mounted to a lower surface of a cable guiding tail by means of screws, for example. Then the rotation axis 25 is orientated in transverse direction relative to the cable guiding tail.

The cable guiding assembly 19 comprises a frame 27 and several guide rollers 28 supported to the frame 27 and arranged to form a guide opening 29 through which an electric cable 14 can pass under guidance provided by the guide rollers 28. In order to provide proper support for the electric cable 14 the assembly 19 comprises two first side rollers 28a and two second side rollers 28b arranged on opposing sides of the frame 27 and being parallel with rotation axis 25 of the rotating joint 20. The assembly 19 further comprises two down rollers 28c located adjacent lower ends of the first and second side rollers 28a, 28b and being orientated in transverse direction in relation to the first and second side rollers 28a, 28b. So there are totally six guide rollers 28.

The down rollers 28c are provided with quick coupling fastening systems 30 for allowing their removal from the frame 27. The quick coupling fastening system 30 may comprise hook-shaped support 31 opening upwards so that when fastening nuts 32 are loosened, the down rollers 28c can be lifted upwards and released from the hook-shaped supports 31. The fastening nuts 32 may be wing nuts, or alternatively any other type of fastening elements can be implemented. After the down rollers 28c are removed from the frame 27, the guide opening 29 is open downwards and the electric cable 14 can come out of the cable guide assembly 19. The structure of the frame 27 is open in downward direction as it clearly shown in Figure 4.

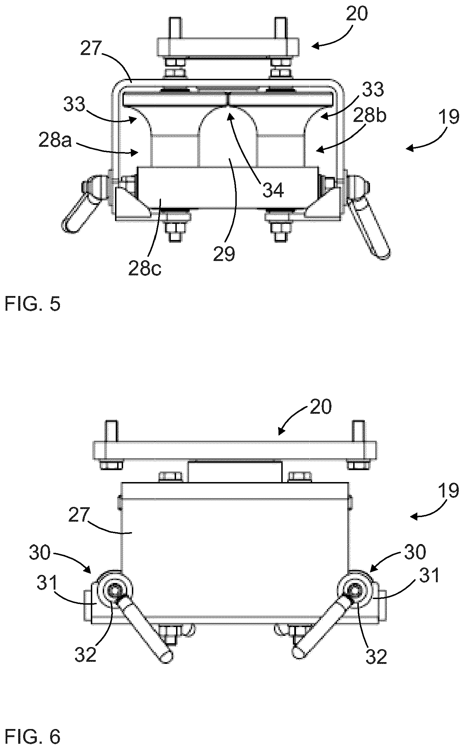

Figure 5 shows that the down rollers 28c have cylindrical outer surfaces and that the first and second side rollers 28a, 28b are provided with geometrically asymmetrical shapes with enlarged side profiles 33 at their first end portions being closer to the rotating joint 20 and opposing their second end portions adjacent to the down rollers 28c. The enlarged side profiles 33 can serve as guide surfaces for the electric cable in a direction towards the rotating joint 20. The two opposing enlarged side profiles 33 form together a curved guide configuration 34 facing towards an electric cable mountable to the guide opening 29. Due to the enlarged side profiles 33 of the side rollers 28a, 28b there is no need for any transverse upper guide rollers whereby number of guide rollers may be lower.

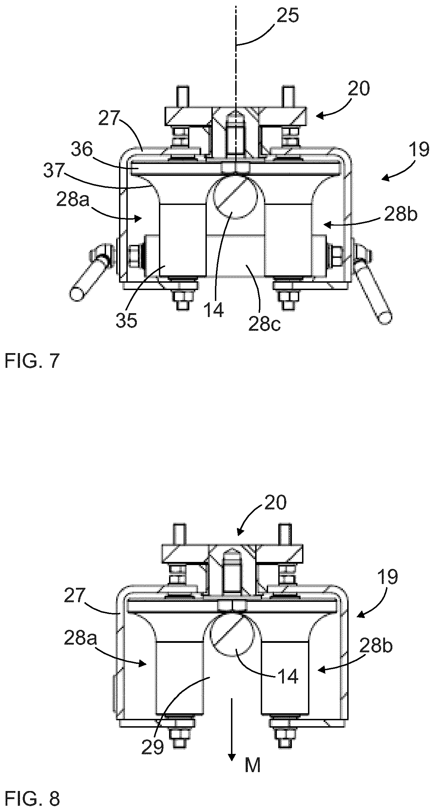

In Figures 7 and 8 geometrically asymmetric side profiles of the side rollers 28a, 28b are shown. The side rollers 28a, 28b comprise first cylindrical sections 35 at their second end portions, and second cylindrical sections 36 at their first end portions. The second cylindrical sections 36 have greater diameters compared to the first cylindrical sections 35. Further, between the first and second cylindrical sections 35, 36 there are continuously enlarging sections 37 wherein the outer diameters expand nonlinearly from the first cylindrical sections 35 to the second cylindrical sections 36. Thus, the sections 37 may be curved surfaces which support and guide an electric cable 14 well, as it is shown in Figures 7 and 8.

In Figure 8 fastenings of the down rollers 28c are opened and the down rollers 28c are removed. Then the electric cable 14 can be moved M away from the guide space 29. A downwardly open structure of the frame 27 and the removable down rollers 28c make it easy and quick to uncouple the cable 14 from the assembly 19.

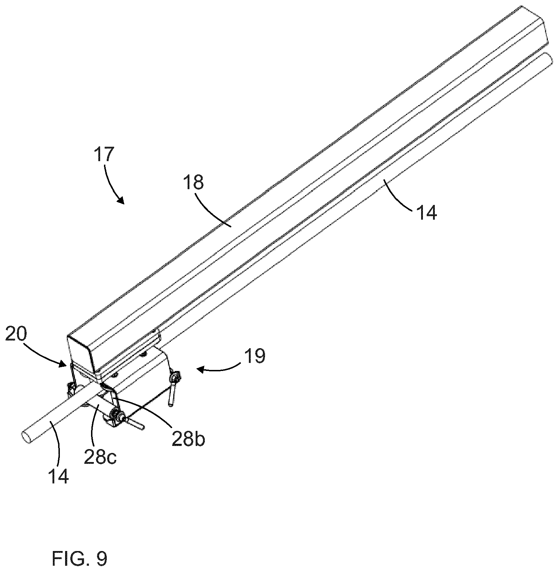

Figure 9 discloses a cable guiding device 17 comprising a cable guiding tail 18, a cable guiding assembly 19, and a rotating joint 20. The cable guiding tail 17 may be an arm-like elongated structure having a desired length. The cable guiding assembly 19 and the rotating joint 20 are located at a distal end portion 18b of the cable guiding tail 17. An opposite end 18a can be mounted to the mining vehicle by means of fastening means.

The drawings and the related description are only intended to illustrate the idea of the invention. In its details, the invention may vary within the scope of the claims.

## Claims

1. A cable guiding device (17) for guiding a trailing electric cable (14) of an electrically powered mining vehicle (1);
the device (17) comprising:
a cable guiding tail (18) which has an elongated arm configuration and comprises a first end (18a) mountable to the mining vehicle (1) and a distal second end (18b);
and a cable guiding assembly (19) mounted to the second end (18b) of the cable guiding tail (18) and comprising several guide rollers (28) for guiding the cable (14) ;
**characterized in that**
the device (17) further comprises a rotating joint (20) between the cable guiding assembly (19) and the cable guiding tail (18) whereby the cable guiding assembly (19) is turnable (T) in relation to the cable guiding tail (18).

2. The device as claimed in claim 1, **characterized in that**
the cable guiding assembly (19) comprises a frame (27) and at least one of the guide rollers (28) is provided with a quick coupling fastening system (30) for allowing removal of the at least guide roller (28) from the frame (27) .

3. The device as claimed in claim 1 or 2, **characterized in that**
the cable guiding assembly (19) comprises several elongated guide rollers (28a, 28b) having side profiles which are geometrically asymmetric in relation to a center between a first end and a second end of the guide rollers (28a, 28b).

4. The device as claimed in any one of the preceding claims 1 - 3, **characterized in that** the cable guiding assembly (19) comprises:
a frame (27) connected to the rotating joint (20) and arranged to provide support for the guide rollers (28);
two first side rollers (28a) and two second side rollers (28b) arranged on opposing sides of the frame (27) and being parallel with rotation axis (25) of the rotating joint (20);
two down rollers (28c) located adjacent lower ends of the first and second side rollers (28a, 28b) and being orientated in transverse direction in relation to the first and second side rollers (28a, 28b);
and wherein each of the first and second side rollers (28a, 28b) are provided with geometrically asymmetrical shapes with enlarged side profiles (33) at their first end portions being closer to the rotating joint (20) and opposing their second end portions adjacent to the down rollers (28c), whereby the enlarged side profiles (33) are configured to serve as guide surfaces for the electric cable (14) in a direction towards the rotating joint (20).

5. The device as claimed in claim 4, **characterized in that** an outer surface of the side roller (28a, 28b) comprises:
a first cylindrical section (35) at the second end portion;
a second cylindrical section (36) at the first end portion and provided with a greater diameter compared to the first cylindrical section (35);
and a continuously enlarging section (37) between the first and second cylindrical sections (35, 36) and wherein the outer diameter expands nonlinearly from the first cylindrical section (35) to the second cylindrical section (36).

6. A mining vehicle (1), comprising:
a movable carrier (2);
at least one mine work device (3) mounted on the carrier (2);
an electrical operating system (12) for powering the mining vehicle (1);
a cable reel (16) for reeling in and out an electric cable (14);
at least one cable guiding device (17) for handling the electric cable (14);
**characterized in that**
the cable guiding device (17) is in accordance with any one of the previous claims 1 - 5.

7. The mining vehicle as claimed in claim 6, **characterized in that**
the cable guiding tail (18) is mounted to an upper part of a rear end part (15) of the mining vehicle (1) and has downwards slanted orientation.

8. The mining vehicle as claimed in claim 6 or 7, **characterized in that**
mounting between the carrier (2) and the cable guiding tail (17) is releasable allowing thereby moving of the cable guiding tail (17) into a transport position (24) wherein the cable guiding tail (18) is orientated in a transverse direction in relation to a longitudinal direction (21) of the mining vehicle (1).

9. A method of guiding a trailing electric cable (14) of an electrically powered mining vehicle (1),
wherein the method comprises:
arranging the electric cable (14) to pass through a cable guiding assembly (19) and supporting the electric cable (14) by means of several guide rollers (28) of the cable guiding assembly (19);
and supporting the cable guiding assembly (19) to a distal part (18b) of a cable guiding tail (18) mounted to a rear end part (15) of the mining vehicle (1);
**characterized by**
allowing the cable guiding assembly (19) to turn in relation to the cable guiding tail (18) in response to movements of the mining vehicle (1).
